# EUROPÄISCHE PATENTSCHRIFT

(11) **EP 3 597 027 B1**
(45) Veröffentlichungstag und Bekanntmachung des Hinweises auf die Patenterteilung: **27.07.2022**
(21) Anmeldenummer: 19184703.7
(22) Anmeldetag: 05.07.2019
(51) Int. Cl.: A01D 41/127, A01D 61/00

(54) **MÄHDRESCHER MIT EINEM SCHRÄGFÖRDERER MIT AKTORISCH VERSTELLBARER, UNTERER UMLENKWALZE**
COMBINE WITH AN INCLINED CONVEYOR WITH LOWER DEFLECTION ROLLER ADJUSTED BY MEANS OF AN ACTUATOR
MOISSONNEUSE-BATTEUSE DOTÉ D'UN CONVOYEUR INCLINÉ POURVU DE ROULEAU DE DÉVIATION INFÉRIEUR RÉGLABLE

(30) Priorität: 19.07.2018 DE 102018212075
(43) Veröffentlichungstag der Anmeldung: 22.01.2020
(73) Patentinhaber: Deere & Company, Moline, IL 61265 (US)
(72) Erfinder: Bischoff, Lutz, 68163 Mannheim (DE); Fries, Christina, 68163 Mannheim (DE); Klein, Oliver, 68163 Mannheim (DE); Lauer, Friedrich, 68163 Mannheim (DE); Loutz, Eric, 68163 Mannheim (DE); Weichholdt, Dirk, 68163 Mannheim (DE)
(74) Vertreter: Holst, Sönke

(56) Entgegenhaltungen:
- EP-A1- 1 040 750
- EP-A1- 2 060 165
- US-B2- 6 834 484

## Beschreibung

Die Erfindung betrifft einen Mähdrescher, umfassend:
ein tragendes Gestell, das durch antreibbare, im Bodeneingriff stehende Mittel in einer Vorwärtsrichtung über ein Feld bewegbar ist,
eine am tragenden Gestell angebrachte Dresch- und Trenneinrichtung,
einen am tragenden Gestell angebrachten Schrägförderer mit einem endlosen Zugmittel, das um eine höhenbewegliche, untere und eine antreibbare, obere Umlenkwalze umläuft und sich quer zum Zugmittel erstreckende Mitnehmer zur unterschlächtigen Förderung von Erntegut trägt, und
einen an der Vorderseite des Schrägförderers angebrachten oder anbringbaren Erntevorsatz zur Aufnahme und/oder zum Abschneiden von auf einem Feld liegenden oder stehenden Erntegut, das über den Schrägförderer der Dresch- und Trenneinrichtung zuführbar ist.

### Stand der Technik

Mähdrescher dienen zur Ernte von Körnerfrüchten. Das zu dreschende Material wird mittels eines Erntevorsatzes von einem Feld aufgenommen oder abgeschnitten und mit einem Schrägförderer einer Drescheinrichtung zugeführt, welche das Material drischt und das Korn abscheidet. Das Korn wird anschließend gereinigt und in einem Korntank zwischengespeichert, bevor es auf ein Transportfahrzeug überladen wird.

Der Schrägförderer umfasst üblicherweise ein Gehäuse, in dem ein unterschlächtig arbeitender Förderer angeordnet ist. Der Förderer umfasst eine obere, rotativ angetriebene Umlenkwalze und eine untere Umlenkwalze, um welche ein endloses Zugmittelpaar in Form von Ketten oder flexiblen Riemen umläuft, das sich quer erstreckende Mitnehmer trägt. Die untere Umlenkwalze ist üblicherweise zwischen unteren und oberen Anschlägen höhenbeweglich, wobei die vertikale Position des unteren Anschlags durch mechanische Mittel am Gehäuse des Schrägförderers von Hand durch einen Bediener veränderbar sein kann (DE 23 02 787 A1, EP 1 040 750 A1, EP 1 621 064 A1). Die Position des oberen Anschlags ist hingegen fest. Das Erntegut wird unterhalb des unteren Trums des Zugmittels auf dem Boden des Gehäuses durch die Mitnehmer nach oben gezogen und schließlich direkt oder durch einen weiteren Förderer an die Drescheinrichtung übergeben. Die Verstellung der Position des unteren Anschlags dient dazu, eine Anpassung an die Feld- und Erntegutbedingungen durchzuführen, denn der untere Anschlag definiert zumindest bei geringen Durchsätzen die Dicke der Erntegutmatte.

### Aufgabe der Erfindung

Im Stand der Technik bewegt sich die untere Umlenkwalze demnach, bedingt durch das einlaufende Erntegut, gegen ihr eigenes Gewicht nach oben, bis sie an den oberen Anschlag stößt. Bei kleineren Erntegutdurchsätzen, bei denen die untere Umlenkwalze noch nicht an dem oberen Anschlag anliegt, beruht die Förderwirkung des Schrägförderers demnach lediglich auf dem Eigengewicht der unteren Umlenkwalze und des Zugmittels mit den dort angebrachten Mitnehmern. Es sind, insbesondere im Falle eines zu hoch eingestellten unteren Anschlags der unteren Umlenkwalze, Betriebssituationen denkbar, in denen ein großer Schlupf entsteht, der zu ungleichmäßiger Zuführung von Erntegut zur Drescheinrichtung führt, was sich nachteilig auf die Leistung des Mähdreschers auswirkt. Zudem erweist sich die Verstellung der Position des unteren Anschlags als problematisch, denn nur wenige Bediener kennen die Bedeutung der Position der unteren Umlenkwalze und sind in der Lage, sie den jeweiligen Bedingungen entsprechend einzustellen.

Die der Erfindung zu Grunde liegende Aufgabe wird darin gesehen, einen demgegenüber verbesserten Mähdrescher bereitzustellen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Mähdrescher umfasst ein tragendes Gestell, das durch antreibbare, im Bodeneingriff stehende Mittel in einer Vorwärtsrichtung über ein Feld bewegbar ist, eine am tragenden Gestell angebrachte Dresch- und Trenneinrichtung, einen am tragenden Gestell angebrachten Schrägförderer mit einem endlosen Zugmittel, das um eine höhenbewegliche, untere und eine antreibbare, obere Umlenkwalze umläuft und sich quer zum Zugmittel erstreckende Mitnehmer zur unterschlächtigen Förderung von Erntegut trägt, und einen an der Vorderseite des Schrägförderers angebrachten oder anbringbaren Erntevorsatz zur Aufnahme und/oder zum Abschneiden von auf einem Feld liegenden oder stehenden Erntegut, das über den Schrägförderer der Dresch- und Trenneinrichtung zuführbar ist. Ein fremdkraftbetätigter Aktor ist zur Verstellung der vertikalen Position der unteren Umlenkwalze angeordnet und mit einer Steuereinrichtung verbunden, welche zudem mit einer Einrichtung zur selbsttätigen Erkennung der Art des jeweils zu erntenden Ernteguts und/oder einer Eingabeeinrichtung zur Eingabe der Art des jeweils zu erntenden Ernteguts und/oder einem eine vorzugsweise vorausschauende Durchsatzermittlung ermöglichenden Sensor signalübertragend gekoppelt und eingerichtet ist, den Aktor abhängig von der erkannten und/oder eingegebenen Art des Ernteguts und/oder dem mit dem Sensor erfassten Messwert, der direkt oder indirekt vom Durchsatz abhängt, anzusteuern. So kann der Sensor die aktuelle vom Antriebsmotor bereitgestellte Leistung erfassen.

Mit anderen Worten wird vorgeschlagen, die vertikale Position der unteren Umlenkwalze des Schrägförderers direkt (durch Anbindung des Aktors an die Drehachse der unteren Umlenkwalze) oder indirekt (d.h. durch Verstellen der Position eines unteren und/oder eines oberen Anschlages der ansonsten frei höhenbeweglichen unteren Umlenkwalze) mittels eines Aktors zu verstellen. Die Einstellung des Aktors basiert auf der Erntegutart (bei der es sich beispielsweise um Weizen, Gerste, Hafer, Mais oder beliebige andere Körnerfrüchte handeln kann) und/oder dem mittels eines Sensors direkt oder indirekt und insbesondere vorausschauend erfassten Durchsatz im Schrägförderer. Dazu ist der Aktor mit einer Steuereinrichtung verbunden, die ihrerseits mit einer Information hinsichtlich der Art des aktuell zu erntenden Ernteguts beaufschlagt wird. Diese Information kann von einer geeigneten Einrichtung selbsttätig erkannt werden, z.B. mittels einer Kamera und einer Bildverarbeitungssoftware, und/oder sie wird mittels einer Eingabeeinrichtung der Steuereinrichtung zugeführt. Hierzu kann eine Bedienerschnittstelle Verwendung finden oder die Steuereinrichtung liest die Art des Ernteguts aus einer Datenbank, in der die Erntegutart für das betreffende Feld eingetragen ist, anhand der Position des Mähdreschers oder eines der Steuereinrichtung zugeführten Ernteauftrags aus.

Auf diese Weise erfolgt eine selbsttätige Anpassung der Position der vorderen Umlenkwalze des Schrägförderers an die Art des Ernteguts und/oder an den Durchsatz, was die eingangs erwähnten Probleme vermeidet oder zumindest vermindert. Dadurch wird der Gutfluss vergleichmäßigt, Belastungsspitzen werden vermieden und wird ein energieeffizienter Betrieb des Mähdreschers ermöglicht.

Der Sensor zur Erfassung des Durchsatzes kann elektrooptisch (z.B. mit einer zwei- oder dreidimensional arbeitenden (Monokular bzw. Stereo-) Kamera und einem Bildverarbeitungssystem oder einem Laser-Scanner) arbeiten und eingerichtet sein, den Bestand vor dem Erntevorsatz und/oder (bei einer vorhergehenden Überfahrt über das Feld) neben dem Mähdrescher zu sensieren. Die Signale des Sensors können auch zur Erkennung der Erntegutart herangezogen werden. Bei einer anderen Ausführungsform kann der Sensor den Durchsatz bereits bei einem zeitlich voraus liegenden Erntevorgang erfassen. Seine Messwerte werden ortsspezifisch in einer Karte eingetragen und beim nachfolgenden Erntevorgang wieder positionsbasiert abgerufen.

Alternativ oder zusätzlich ist der Sensor eingerichtet, den Durchsatz des Erntevorsatzes zu erfassen. Hierzu kann der Sensor eingerichtet sein, ein Antriebsmoment eines Förderers des Erntevorsatzes zu erfassen, z.B. eines zur Querförderung dienenden Schneckenförderers oder eines Quer- oder Längs-Förderbands eines Bandschneidwerks. Die Signale des Sensors werden, basierend auf der Vortriebsgeschwindigkeit des Mähdreschers und anderer, relevanter Größen in an sich bekannter Weise derart umgerechnet, dass die untere Umlenkwalze sich dann in der dem Sensorwert zuzuordnenden Position befindet, wenn der dem Sensorwert zuordenbare Durchsatz in den Schrägförderer einläuft. Auch besteht die Möglichkeit, an einer beliebigen Stelle des Mähdreschers ein Antriebsmoment eines mit Erntegut zusammenwirkenden Elements, z.B. einer Dresch- oder Trenneinrichtung oder des Antriebsmotors zu erfassen, um den Durchsatz indirekt zu sensieren.

Ein zur Verstellung des Dreschspalts der Drescheinrichtung eingerichteter Dreschspaltaktor kann mit der Steuereinrichtung verbunden und die Steuereinrichtung eingerichtet sein, den Dreschspalt durch Ansteuerung des Dreschspaltaktors basierend auf dem Signal des Sensors und/oder auf der erkannten und/oder eingegebenen Art des Ernteguts zu verstellen. Auch kann ein zur Verstellung der Größe eines verstellbaren Trennspalts der rotierenden Trenneinrichtung eingerichteter Trennspaltaktor mit der Steuereinrichtung verbunden und die Steuereinrichtung eingerichtet sein, den Trennspalt durch Ansteuerung des Trennspaltaktors basierend auf dem Signal des Sensors und/oder auf der erkannten und/oder eingegebenen Art des Ernteguts zu verstellen. Demnach dient oder dienen der vom Sensor erfasste Durchsatz und/oder die Erntegutart auch zur Einstellung der Größe des Dresch- und/oder Trennspalts.

### Ausführunasbeispiele

In den Zeichnungen ist ein nachfolgend näher beschriebenes Ausführungsbeispiel der Erfindung dargestellt.

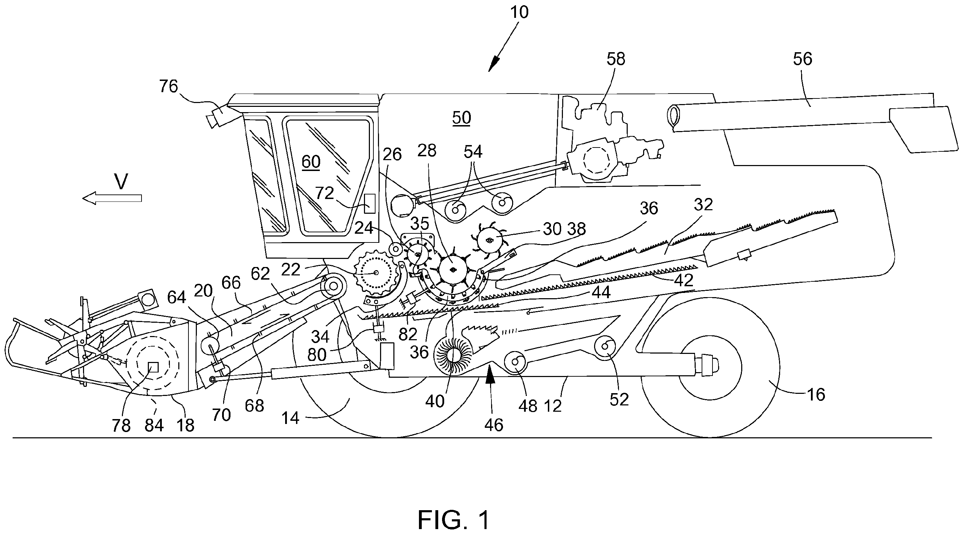

Die Figur 1 zeigt eine schematische seitliche Ansicht eines Mähdreschers.

Der in der Figur 1 gezeigte, selbstfahrenden Mähdrescher 10 ist mit einem tragenden Gestell 12 ausgestattet, das sich über Bodeneingriffsmittel in Form angetriebener, vorderer Räder 14 und lenkbarer, rückwärtiger Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder anderen, dreschbaren Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, eine Trenntrommel 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb der Trenntrommel 28 ein Separierkorb 36 mit verstellbaren Fingerelementen befindet. Unterhalb der Wendetrommel 30 ist ein Fingerrechen 38 angeordnet.

Unterhalb des Mehrtrommeldreschwerks befindet sich ein vorderer Förderboden 40. Ein hinterer Förderboden 42 ist unterhalb des Strohschüttlers 32 angeordnet. Die Förderböden 40, 42 transportieren das Gemisch aus Korn, Kurzstroh und Spreu zu einer Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des tragenden Gestells 12. Außerhalb des tragenden Gestells 12 befindet sich eine Außenhülle, die größtenteils aufklappbar ist.

Der unterschlächtig arbeitende Schrägförderer 20 umfasst in an sich bekannter Weise eine obere Umlenkwalze 62 und eine untere Umlenkwalze 64. Um die Umlenkwalzen 62, 64 laufen flexible Zugmittel 66 um, bei denen es sich um Ketten oder flexible Fördergurte handeln kann, von denen zwei oder mehr seitlich nebeneinander angeordnet sind und durch geeignete Führungsmerkmale (z.B. Zahnräder oder Nocken) auf den Umlenkwalzen 62, 64 geführt werden. Die Zugmittel 66 sind durch sich quer zur Förderrichtung erstreckende Mitnehmer 68 untereinander verbunden. Die obere Umlenkwalze 62 ist rotativ durch einen geeigneten Antrieb antreibbar. Die untere Umlenkwalze 64 ist an beiden Enden vertikal beweglich gelagert und durch je einen Aktor 70 parallel höhenverstellbar, von denen in der Figur 1 nur einer dargestellt ist.

Die Aktoren 70 sind mit einer Steuereinrichtung 72 gekoppelt und werden durch letztere kontrolliert. In an sich bekannter Weise kann den Aktoren 70 je ein Rückkopplungssensor (nicht gezeigt) zugeordnet sein, der die aktuelle Position des Aktors 70 erfasst und zu Regelungszwecken an die Steuereinrichtung 72 zurückmeldet. Die Vorgabe der Position des Aktors 70 erfolgt durch die Steuereinrichtung 72 basierend auf Signalen von einer Bedienereingabeeinrichtung 74, mit welcher der Bediener die jeweils zu erntende Erntegutart eingeben kann. Zudem wird durch einen ersten Sensor 76 in Form einer Kamera mit einem Bildverarbeitungssystem das Feld vor dem Erntevorsatz 18 beobachtet. Das Bildverarbeitungssystem evaluiert aus den Bildern der Kamera den jeweils im Schrägförderer 20 zu erwartenden Durchsatz. Das Bildverarbeitungssystem kann zudem Signale hinsichtlich der Art des Ernteguts ausgeben, welche die Eingaben der Bedienereingabeeinrichtung 74 ergänzen oder ersetzen. Der zweite Sensor 78 erfasst das Antriebsmoment einer Querförderschnecke 84 des Erntevorsatzes.

Die Steuereinrichtung 72 erhält demnach Signale hinsichtlich der Erntegutart und des Durchsatzes im Schrägförderer 20 und ist programmiert, anhand dieser Signale einen Sollwert für die Höhe der unteren Umlenkwalze 64 vorzugeben, die dazu dienen, einen Sollwert für den Aktor 70 zu berechnen und letzteren zur Einstellung des Aktors 70 zu verwenden. Die vertikale Position der unteren Umlenkwalze 64 wird demnach selbsttätig an den jeweiligen Erntegutdurchsatz im Schrägförderer 20 und an die Erntegutart angepasst.

Auf eine analoge Weise verstellt die Steuereinrichtung 72 zudem einen Dreschspaltaktor 80, der die Größe des Dreschspalts zwischen der Dreschtrommel 22 und dem Dreschkorb 34 vorgibt, und einen Trennspaltaktor 82, der die Größe des Trennspalts zwischen der Trenntrommel 28 und dem Separierkorb 36 vorgibt. Der Dresch- und Trennspalt werden demnach ebenfalls selbsttätig an die Erntegutart und den Durchsatz angepasst.

Es sei noch angemerkt, dass die Steuereinrichtung 72 in an sich bekannter Weise den räumlichen und zeitlichen Versatz zwischen der Sensierung des Ernteguts durch die Sensoren 76, 78 und dem Erreichen des Schrägförderers 20 berücksichtigt, um zu erreichen, dass die Einstellung der Aktoren 70 auf dem sie gerade durchlaufenden, von den Sensoren 76, 78 sensierten Erntegut beruht. Analog wird bei dem Dreschspaltaktor 80 und dem Trennspaltaktor 82 vorgegangen.

Das in der Figur 1 dargestellte Mehrtrommeldreschwerk ist lediglich ein Ausführungsbeispiel und könnte durch ein Tangentialdreschwerk mit einer einzigen Dreschtrommel und einer oder mehreren axialen Abscheidetrommel oder einem Strohschüttler oder eine einzige oder mehrere Axialdresch- und Trenntrommeln ersetzt werden. Der Dreschspaltaktor 80 würde in diesem Fall den Dreschspalt der Tangentialdreschtrommel oder des Dreschabschnitts der Axialdresch- und Trenntrommel einstellen. Der Trennspaltaktor 82 würde ggf. den Spalt der Trenntrommel oder des Trennabschnitts der Axialdresch- und Trenntrommel verstellen. Die Aktoren 70, 80 und 82 können, wie in der Figur 1 gezeigt, als Hydraulikzylinder ausgeführt sein, aber auch in Form von elektromagnetischen oder pneumatischen Aktoren ausgeführt werden.

## Patentansprüche

1. Mähdrescher (10), umfassend:
ein tragendes Gestell (12), das durch antreibbare, im Bodeneingriff stehende Mittel in einer Vorwärtsrichtung über ein Feld bewegbar ist,
eine am tragenden Gestell (12) angebrachte Dresch- und Trenneinrichtung,
einen am tragenden Gestell (12) angebrachten Schrägförderer (20) mit einem endlosen Zugmittel (66), das um eine höhenbewegliche, untere Umlenkwalze (64) und eine antreibbare, obere Umlenkwalze (62) umläuft und sich quer zum Zugmittel (66) erstreckende Mitnehmer (68) zur unterschlächtigen Förderung von Erntegut trägt, und
einen an der Vorderseite des Schrägförderers (20) angebrachten oder anbringbaren Erntevorsatz (18) zur Aufnahme und/oder zum Abschneiden von auf einem Feld liegenden oder stehenden Erntegut, das über den Schrägförderer (20) der Dresch- und Trenneinrichtung zuführbar ist,
**dadurch gekennzeichnet, dass** ein fremdkraftbetätigter Aktor (70) zur Verstellung der vertikalen Position der unteren Umlenkwalze (64) angeordnet und mit einer Steuereinrichtung (72) verbunden ist, welche zudem mit einer Einrichtung zur selbsttätigen Erkennung und/oder einer Eingabeeinrichtung (74) zur Eingabe der Art des jeweils zu erntenden Ernteguts und/oder einem eine insbesondere vorausschauende Durchsatzermittlung ermöglichenden Sensor (76, 78) signalübertragend gekoppelt und eingerichtet ist, den Aktor (72) abhängig von der erkannten und/oder eingegebenen Art des Ernteguts und/oder dem mit dem Sensor (76, 78) erfassten Durchsatz anzusteuern.

2. Mähdrescher (10) nach Anspruch 1, wobei der Aktor (72) direkt mit einer Achse der unteren Umlenkwalze (64) oder mit einem unteren und/oberen Anschlag zur Begrenzung der Höhenbewegung der unteren Umlenkwalze (64) verbunden ist.

3. Mähdrescher (10) nach Anspruch 1 oder 2, wobei der Sensor (76) elektrooptisch arbeitet und eingerichtet ist, den Bestand vor dem Erntevorsatz (18) und/oder neben dem Mähdrescher (10) zu sensieren und/oder bei einem vorherigen Erntevorgang ermittelte Daten eines Durchsatzsensors in eine Karte eingetragen sind und vorausschauend durch die Steuereinrichtung (72) auslesbar sind.

4. Mähdrescher (10) nach einem der vorhergehenden Ansprüche, wobei der Sensor (78) eingerichtet ist, den Durchsatz des Erntevorsatzes (18) oder des Mähdreschers (10) zu erfassen.

5. Mähdrescher (10) nach Anspruch 4, wobei der Sensor (78) eingerichtet ist, ein Antriebsmoment eines Förderers (84) des Erntevorsatzes (18) und/oder einer Welle im Dresch- oder Separator-Bereich und/oder die Motorleistung des Mähdreschers (10) zu erfassen.

6. Mähdrescher (10) nach einem der vorhergehenden Ansprüche, wobei ein zur Verstellung des Dreschspalts der Drescheinrichtung eingerichteter Dreschspaltaktor (80) mit der Steuereinrichtung (72) verbunden ist und die Steuereinrichtung (72) eingerichtet ist, den Dreschspalt basierend auf dem Signal des Sensors (76,78) und/oder auf der erkannten und/oder eingegebenen Art des Ernteguts zu verstellen.

7. Mähdrescher (10) nach einem der vorhergehenden Ansprüche, wobei ein zur Verstellung der Größe eines verstellbaren Trennspalts der rotierenden Trenneinrichtung eingerichteter Trennspaltaktor (82) mit der Steuereinrichtung (72) verbunden ist und die Steuereinrichtung (72) eingerichtet ist, den Trennspalt basierend auf dem Signal des Sensors (76, 78) und/oder auf der erkannten und/oder eingegebenen Art des Ernteguts zu verstellen.

## Claims

1. Combine harvester (10) comprising:
a load-bearing undercarriage (12) which is movable over a field in a forward direction by drivable means engaged in the ground,
a threshing and separating device attached to the load-bearing undercarriage (12),
a feeder house (20) attached to the load-bearing undercarriage (12) comprising an endless traction means (66) which circulates about a vertically movable lower deflection roller (64) and a drivable upper deflection roller (62) and bears driver elements (68) extending transversely to the traction means (66) for the undershot conveyance of harvested crops, and
a harvesting attachment (18) which is attached or attachable to the front face of the feeder house (20) for receiving and/or for cutting off harvested crops which are lying or standing upright on a field and which are able to be supplied via the feeder house (20) to the threshing and separating device,
**characterized in that** an actuator (70) which is actuated by external force is arranged for adjusting the vertical position of the lower deflection roller (64) and is connected to a control device (72) which is additionally coupled to a device for automatic recognition and/or to an input device (74) for the input of the type of harvested crops to be harvested in each case and/or to a sensor (76, 78) permitting the determination of the throughput, in particular in a predictive manner, by the transmission of signals and is designed to activate the actuator (72) as a function of the identified and/or input type of harvested crops and/or the throughput detected by the sensor (76, 78).

2. Combine harvester (10) according to Claim 1, wherein the actuator (72) is directly connected to an axle of the lower deflection roller (64) or to a lower and/or upper stop for limiting the vertical movement of the lower deflection roller (64).

3. Combine harvester (10) according to Claim 1 or 2, wherein the sensor (76) operates electro-optically and is designed to detect the standing crop upstream of the harvesting attachment (18) and/or adjacent to the combine harvester (10) and/or data of a throughput sensor determined in a previous harvesting process are input into a memory card and are able to be read in a predictive manner by the control device (72).

4. Combine harvester (10) according to one of the preceding claims, wherein the sensor (78) is designed to detect the throughput of the harvesting attachment (18) or the combine harvester (10).

5. Combine harvester (10) according to Claim 4, wherein the sensor (78) is designed to detect a drive torque of a conveyor (84) of the harvesting attachment (18) and/or a shaft in the threshing or separating region and/or the engine power of the combine harvester (10).

6. Combine harvester (10) according to one of the preceding claims, wherein a threshing gap actuator (80) which is designed to adjust the threshing gap of the threshing device is connected to the control device (72) and the control device (72) is designed to adjust the threshing gap based on the signal of the sensor (76, 78) and/or on the type of harvested crops identified and/or input.

7. Combine harvester (10) according to one of the preceding claims, wherein a separating gap actuator (82) which is designed to adjust the size of an adjustable separating gap of the rotating separating device is connected to the control device (72) and the control device (72) is designed to adjust the separating gap based on the signal of the sensor (76, 78) and/or on the type of harvested crops identified and/or input.

## Revendications

1. Moissonneuse-batteuse (10) comprenant :
un châssis porteur (12) qui peut être déplacé vers l'avant à travers un champ par des moyens d'engagement au sol pouvant être entraînés,
un dispositif de battage et de séparation fixé au châssis porteur (12),
un convoyeur incliné (20) qui est fixé au châssis porteur (12) et qui comporte un moyen de traction sans fin (66) qui circule autour d'un rouleau de renvoi inférieur (64) réglable en hauteur et d'un rouleau de renvoi supérieur (62) pouvant être entraîné et qui porte des entraîneurs (68) qui s'étendent transversalement au moyen de traction (66) et qui sont destinés au transport de récoltes par un mouvement commandé par le bas, et
un accessoire de récolte (18) qui est fixé ou peut être fixé à l'avant du convoyeur incliné (20) et qui est destiné à recevoir et/ou découper les récoltes placées horizontalement ou verticalement dans un champ et pouvant être amenées au dispositif de battage et de séparation par le biais du convoyeur incliné (20),
**caractérisé en ce qu'**un actionneur à alimentation externe (70) est disposé de manière à régler la position verticale du rouleau de renvoi inférieur (64) et est relié à un dispositif de commande (72) qui est en outre couplé en transmission de signal à un dispositif de reconnaissance automatique et/ou un dispositif d'entrée (74) permettant de saisir le type de récolte à récolter et/ou à un capteur (76, 78) permettant notamment une détermination prédictive du débit et qui est conçu pour commander l'actionneur (72) en fonction du type détecté et/ou saisi de récolte et/ou du débit détecté avec le capteur (76, 78).

2. Moissonneuse-batteuse (10) selon la revendication 1, l'actionneur (72) étant relié directement à un axe du rouleau de renvoi inférieur (64) ou à une butée inférieure et/ou supérieure destinée à limiter le mouvement vertical du rouleau de renvoi inférieur (64).

3. Moissonneuse-batteuse (10) selon la revendication 1 ou 2, le capteur (76) fonctionnant de manière électro-optique et étant conçu pour détecter ce qui se trouve devant l'accessoire de récolte (18) et/ou à côté de la moissonneuse-batteuse (10) et/ou des données, déterminées lors d'un processus de récolte précédent, d'un capteur de débit étant enregistrées dans une carte et pouvant être lues à l'avance par le dispositif de commande (72).

4. Moissonneuse-batteuse (10) selon l'une des revendications précédentes, le capteur (78) étant conçu pour détecter le débit de l'accessoire de récolte (18) ou de la moissonneuse-batteuse (10).

5. Moissonneuse-batteuse (10) selon la revendication 4, le capteur (78) étant conçu pour détecter un couple d'entraînement d'un convoyeur (84) de l'accessoire de récolte (18) et/ou d'un arbre situé dans la zone de battage ou de séparation et/ou la puissance du moteur de la moissonneuse-batteuse (10).

6. Moissonneuse-batteuse (10) selon l'une des revendications précédentes, un actionneur d'espace de battage (80), conçu pour régler l'espace de battage du dispositif de battage, étant relié au dispositif de commande (72) et le dispositif de commande (72) étant conçu pour régler l'espace de battage en fonction du signal du capteur (76, 78) et/ou du type de récolte détecté et/ou saisi.

7. Moissonneuse-batteuse (10) selon l'une des revendications précédentes, un actionneur d'espace de séparation (82), conçu pour régler la dimension d'un espace de séparation réglable du dispositif de séparation rotatif, étant relié au dispositif de commande (72) et le dispositif de commande (72) étant conçu pour régler l'espace de séparation en fonction du signal du capteur (76, 78) et/ou du type de récolte détecté et/ou saisi.
